# EUROPEAN PATENT SPECIFICATION

(11) **EP 3 067 203 B1**
(45) Date of publication and mention of the grant of the patent: **21.10.2026**
(21) Application number: 15460032.4
(22) Date of filing: 18.07.2015
(51) Int. Cl.: B32B 1/00, B32B 3/26, B32B 3/28, B32B 7/03, B32B 7/12, B32B 29/00, B32B 29/08, B31D 3/00, B65D 5/22, B65D 65/40, D21H 17/40, D21H 27/10, D21H 27/40

(54) **LIGHT CONSTRUCTION SUPPORT**
LEICHTE BAUSTÜTZE
SUPPORT DE CONSTRUCTION LEGERE

(30) Priority: 10.03.2015 PL 40894215
(43) Date of publication of application: 14.09.2016
(73) Proprietor: SEPPA Spolka z Ograniczona Odpowiedzialnoscia, 87-152 Lubianka (PL)
(72) Inventor: WEGRZYN, Pawel, 87-140 Chelmza (PL); GIL, Jerzy, Kard, 87-140 Chelmza (PL)

(56) References cited:
- EP-A1- 2 868 470
- US-A- 5 681 641
- US-A- 5 733 403

## Description

The object of the invention is a light construction support, especially the type manufactured from cardboard or paper. The invention is applicable, among others, in manufacturing empty space fillers, e.g. in packaging, in transport, and is also applicable in manufacturing light supports or platforms. In a particular application using a proper system of connecting it together and forming, it can be a packaging itself.

It is common knowledge that for the abovementioned applications, especially for empty space fillers, the following are alternatively used - polyurethane foams, expanded polystyrene, bubble wrap, cardboard and especially corrugated board. Flat or box-shaped cardboard is used more often to serve both those functions. Boxes made of cardboard are rigid in contrast with bubble wrap and polyurethane foam, however, they can be easily crushed, unless they are made of multi-layer cardboard, especially corrugated board. With perpendicular arrangement, to the direction of corrugation of the multi-layer corrugated board, significant resistance to crushing is maintained, this resistance is better with more layers of the multi-layer corrugated board in the light construction support.

Construction supports manufactured using corrugated board are disclosed in e.g. US 5,681,641 and US 5,733,403.

From the patent application PL394042, by the way of manufacturing, the construction of corrugated board packaging is known. The board sheets are made of corrugated board containing a corrugated layer placed between the first external flat layer and the second external flat layer.

It is also common for strengthening the construction to join a few three-layer corrugated board sheets together of a specified construction. It is also applied in the construction of cardboard fillers made of many layers of three-layer board joined together in a pile. By analogy, it is possible to obtain a strengthened construction thanks to board of more than three layers, which can also be joined in a pile for special applications.

Whereas, from the patent application number PL405892 a light construction support is known, especially manufactured using corrugated board, where successive adjacent layers coming one after the other are spatially different. The pile of intermediate products that it is composed of has a given spatial shape and can be wrapped with a dust cover. Double-layer corrugated board, which it is made of, has a corrugation height equal at least to the height of the B-type corrugation profile and at the same time it has spacing corresponding to corrugation of another type, not larger than the value of corrugation separation type D. It is best if the separation contained in this application and manufactured corrugation height correlates with the corrugation separation of a lower level, where one m3 of the construction support preferably contains a maximum 1000m2 of paper, and preferably less than 750m2of paper.

The described solution allows to produce a lighter block and using less material. It is also possible for making such blocks made of corrugated board to use, interchangeably or jointly, different shapes of corrugations, e.g. sinusoidal, triangular, trapezoidal, rectangular. This application also contains a brief characteristic of other options of manufacturing known in the paper industry.

It is an inconvenience that although the strength is good, it is not the best with weight optimisation of a light construction support manufactured in such way by decreasing the number of paper layers and at the same time by increasing the height of the corrugation and decreasing the corrugation separation to the values previously not used in constructions.

The objective of this solution according to the patent is strengthening the construction of light construction supports in the direction perpendicular to the direction of arrangement of layers of the corrugated board, which such a support is made of, keeping its low weight at the same time and the lowest amount of base material the support is made of. The objective is also to achieve enough strength for the support to play a role of an independently sufficient construction in the paper industry, using the smallest possible amount of base material, possibly placed on one another, which the support of a required shape is made of.

According to the invention the light construction support is manufactured using paper or cardboard, which is formed into corrugated board, which is an intermediate product, as defined in claim 1. The corrugated board, which is an intermediate product, is arranged in a pile of a given spatial shape and of at least one layer. The pile can optionally be wrapped in a dust cover, and the corrugated board as an intermediate product has a corrugation height corresponding at least to the height of the B-type corrugation profile and at the same time it has spacing equal to corrugation of another type, preferably not larger than the value of corrugation separation type D, wherein the intermediate product is corrugated board of at least three layers, containing a corrugated layer placed between at least one first external flat layer and at least one second external flat layer, where the number of intermediate products in one m³ of the pile is lower than 250.

One m³ of the construction support contains a maximum of 1000m2 of paper, and preferably less than 750m2 of paper.

The light construction support is preferably manufactured using corrugated boards containing a corrugated layer with the corrugation height of up to 50mm.

It is preferably constructed using intermediate products containing uniform corrugated layers of could be manufactured using intermediate products which have different shapes of corrugation in the corrugated layer.

It is also possible to manufacture the light construction support in such a way that at least one layer of the intermediate product is made of paper of different paper substance in relation to at least one of the other layers of intermediate products.

The corrugated layer can have the corrugation shape of a triangle or a trapezoid or a rectangle or a sinusoid, where the entirety of the light construction support can contain various corrugation shapes in individual layers of the pile that it is made of.

The corrugated layers in adjacent intermediate products is displaced in relation to one another in parallel planes and together or alternately turned through an angle not wider than the right angle.

At least one transverse section of the light construction support, especially parallel to the arrangement of intermediate products, preferably it has a regular shape, such as: a circle, an ellipsis, an oval, a rectangle, a triangle, a trapezoid, a polygon, a star, or it can have an irregular shape.

The first external flat layer and at the same time or alternately the second external flat layer can be multiplied within one intermediate product.

The thickness of the light construction support measured along the layers of the pile is preferably between 0.005m and 2.0m, and even more preferably between 0.05 meters and 0.50 meters.

The surface of any of the external flat layers is preferably between 0.001 m² and 5.0 m², and even more preferably between 0.1 m² and 1 m²

The light construction support is preferably manufactured in a way that the number of layers of intermediate products used is lower than fifty, preferably lower than ten, and the number of successive paper layers counted sequentially and making up the intermediate product is at least three and at the same time not more than nine.

At least one intermediate product in a pile of intermediate products can have a line of cardboard bending and at the same time or alternately a cutting line in relation to which at least a fragment of the pile or an intermediate product is properly bended and at the same time or alternately separated or folded.

The light construction support can be formed in a spatial block, whereas the block can contain inside at least one empty section. Preferably the light construction support constitutes a packaging or a container. The light construction support is manufactured from at least one intermediate product.

According to the patent, the light construction support is manufactured in a technological process, in which corrugated board is formed by gluing individual layers together either from paper or cardboard rolled onto at least one roll, or from separate sheets. Some of the layers remain flat and in this form are glued with another layer, some of them are formed in the press so that they are formed into corrugate with a profile set in the press and as a corrugated layer they are placed between the flat layers. In the manufacturing process of the multi-layer corrugated cardboard, at least three-layer, the number of N layers are glued together in order to get an N-layer cardboard, which is an intermediate product. The corrugated cardboard, which is an intermediate product, is possibly glued or put in a pile of a given spatial shape, where the pile contains at least one layer of the N-layer cardboard. For achieving the required spatial shape the intermediate products are cut out separately or cut into the required shape, and the pile is made by putting one on the other, preferably aligned. The resulting pile can be cut into a desired shape. The pile can possibly wrapped in dust cover made of paper/cardboard or another type of material, e.g. plastic. The resulting light construction support can contain various shapes of corrugation in individual layers of the pile depending on the used forms of the press and the sequence of selecting intermediate products chosen in the process of layering intermediate products in a pile. For the purpose of strengthening the whole structure in the direction of aligning the intermediate products into a pile, corrugated layers in intermediate products adjacent to one another can be moved in relation to one another in parallel planes and at the same time or alternately turned through an angle not wider than the right angle, where it is done at the stage of stacking the pile. For the purpose of strengthening the whole structure in the plane of the stacked product the first external flat layer and at the same time or alternately the second external flat layer can be multiplied within one intermediate product, this however is done at the stage of manufacturing corrugated cardboard. To make it possible to manufacture the light construction support with a lower number of intermediate product layers, in relation to the size of the resulting support, it is possible to place a part of layers at an angle in relation to the other layers of the pile, and in an extreme case even in relation to the same single layer in relation to itself, made of one intermediate product cut according to the cutting press. After forming the cardboard bending and cutting line it is possible to profile the pile into a spatial closed or open shape, where individual fragments of the pile of intermediate product layers, and in an extreme case made of one intermediate product, they can be joined together or support one another at an angle between 0° to 90°. Forming into a spatial block is also possible if intermediate products, which the pile is made of, are incomplete, i.e. they contain empty areas as a result of cutting parts of them. In an extreme case the internal layers of the pile of intermediate products only have an envelope. The empty areas can be place axially in relation to one another, and also with a displacement. Such a construction of the light construction support still maintains good strength parameters and additionally lowers its weight. Apart from the abovementioned qualities it maintains the function of a filler of empty spaces in other packaging types. In a special manufacturing process the light construction support can itself constitute a packaging or a container, especially if as a result of bending and cutting a single intermediate product with a high corrugation profile of the corrugated layer constitutes the bottom and walls and possibly its closing cover. It is best to make it for a construction support made of the lowest possible number of intermediate product layers, most preferably made of one layer.

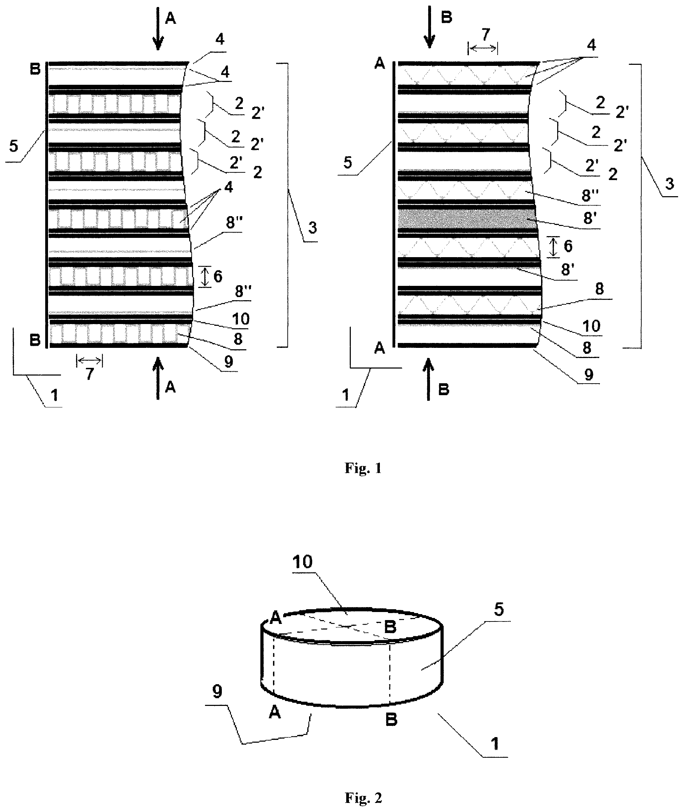

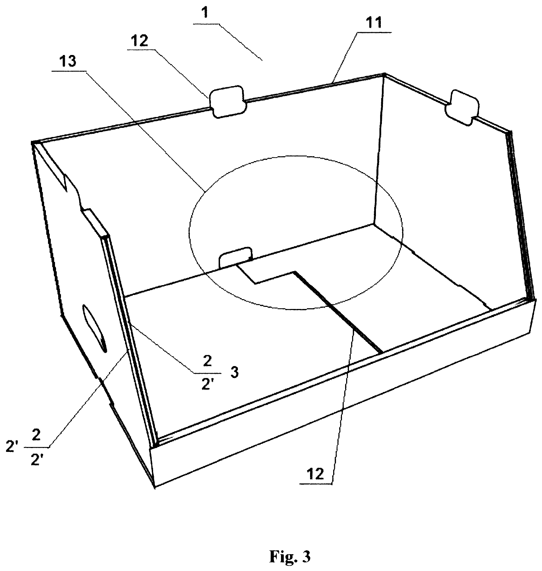

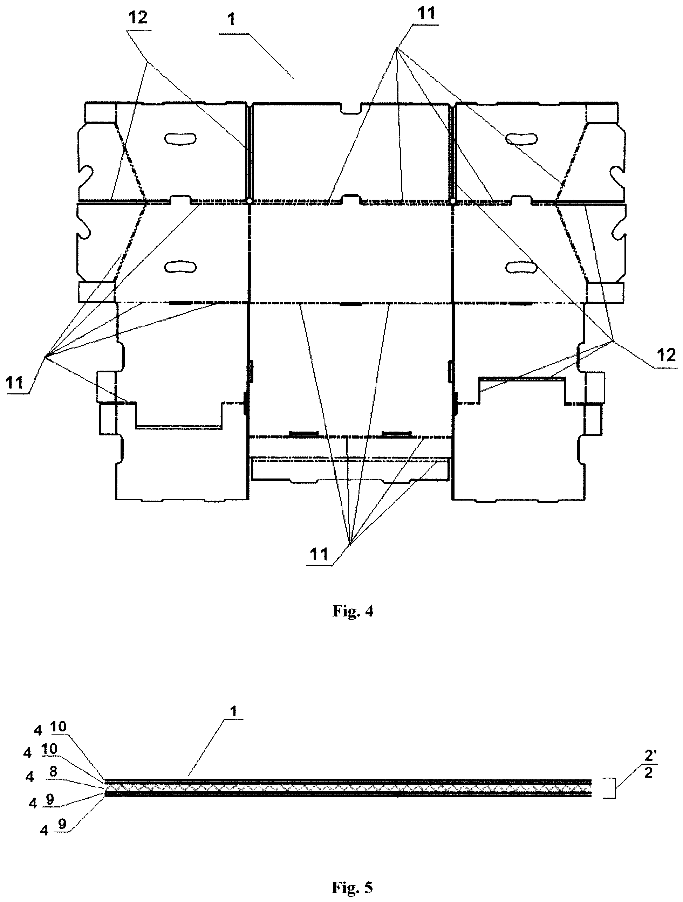

The solution according to the invention is presented in a manufacturing example in a drawing, where Fig. 1 presents a fragment of the light construction support in a vertical cross-section respectively A-A and B-B through all the layers used to manufacture it from the first example, Fig. 2 presents the light construction support in the perspective of the first example, and Fig. 3 presents a cuboid shaped open container made of the light construction support in the second example, whereas Fig. 4 presents a punching die of a container made of the light construction support from the second example, and Fig. 5 presents a cross-section through the light construction support from the second example.

### Example I

An example of the light construction support 1, according to the invention, is made of paper which is formed into corrugated board 2, which is the intermediate product 2'. The corrugated board 2 is stacked in a pile 3 of a given spatial shape, where the pile 3 is made of thirty layers 4 and is wrapped with a dust cover 5. The corrugated board 2 as an intermediate product 2' has a corrugation height 6 corresponding to the height of the corrugation profile of type K amounting to 6mm and at the same time it has spacing 7 corresponding to the profile of corrugation type C. Corrugated three-layer board 2 is an intermediate product 2', which contains a corrugated layer 8 placed between one first external flat layer 9 and one second external flat layer 10, where the number of intermediate products, stacked one on another, in one m³ of the pile is 165, if a pile of such volume was stacked from the specified intermediate products with the surface area of one m² each. Correspondingly, one m³ of the construction support made in accordance with guidelines concerning the intermediate product from the example contains 540m² of paper. In the example the light construction support 1 is made of corrugated board 2 containing a corrugated layer 8 with a corrugation height 6 of 6mm, whereas its actual volume results from the values specified below. It is manufactured from intermediate products 2' containing corrugated layers 8, which in relation to one another differ in corrugation shape of the corrugated layer 8. Every second intermediate product 2' contains rectangular corrugations 8', and the other intermediate products contain sinusoidal corrugations 8". Each flat layer 9,10 of the intermediate product 2', that is two layers of it in total 4 are made of paper which has different, higher paper substance in relation to the corrugated layer 8',8" of the intermediate product 2'. Corrugated layers 8',8" in intermediate products adjacent to one another are turned in relation to one another through the right angle looking at the direction of corrugation, whereas corrugated layers 8' are displaced in relation to one another in parallel planes, similarly to the corrugated layers 8", which are also displaced in relation to one another in parallel planes. All the cross-sections of the light construction supports 1 parallel to the placement of intermediate products 2' in the location of flat layers 9,10 of intermediate products, have the shape of a regular ellipsis. For this manufacturing example the thickness of the light construction support 1 measured along the layers 4 of the stacked pile 3 amounts to 0.06m. Correspondingly, the surface area of any flat layer 9,10 of the pile 3 amounts to 0.3m².

### Example II

An example of the light construction support 1, according to the invention, is made of cardboard which is formed into corrugated board 2, which is the intermediate product 2'. The corrugated board 2 is stacked in a pile 3 of a given spatial shape, where the pile has five layers 4. The corrugated board 2 as an intermediate product 2' has a corrugation height 6 corresponding to the height of the corrugation profile of type D amounting to 8mm and at the same time it has spacing 7 corresponding to the profile of corrugation type A. Corrugated five-layer board 2 is an intermediate product 2', which contains a corrugated layer 8 placed between two first external flat layers 9 and two second external flat layers 10, where the number of intermediate products 2', stacked one on another, in one m³ of the pile is 123, if a pile of such volume was stacked from the specified intermediate products with the surface area of one m² each. Correspondingly, one m³ of the construction support made in accordance with guidelines concerning the intermediate product from the example contains 540m² of paper.

The light construction support 1 is made of corrugated board 2 containing a corrugated layer 8 with the corrugation height of 8mm. It is manufactured form the intermediate product 2' containing a corrugated layer 8 uniform in the shape of triangular corrugation. Each layer of the intermediate product 2', that is five layers of it in total 4 is made of paper of identical paper substance. The thickness of the light construction support 1 measured along the layers 4 of the stacked pile 3 amounts to 0.008m. The surface area of any of the flat layers 9,10 of the intermediate product 2' amounts to 2m². Each intermediate product 2' in the pile 3 of intermediate products 2' has cardboard bending lines 11 and also cutting lines 12 in relation to which the pile 3 is properly bended and at the same time folded. The light construction support 1 after bending and folding is formed into a spatial block 1' in the shape of a cuboid, where this block contains an empty area inside 13. The light construction support 1 is at the same time a cardboard container. It is made of a single intermediate product 2'.

## Claims

1. A light construction support (1), manufactured using paper or cardboard, which is formed into corrugated board, which constitutes an intermediate product stacked into a pile of a given spatial shape and has at least one layer, wherein the pile is optionally wrapped in a dust cover (5), wherein the corrugated board has a corrugation height corresponding to at least the height of the corrugation profile type B, wherein the intermediate product (2') is corrugated board (2) made of at least three layers, containing a corrugated layer (8) placed between at least one first external flat layer (9) and at least one second external flat layer (10), wherein one m³ of it contains a maximum 1000m² of paper, preferably less than 750m² of paper and wherein the number of intermediate products (2') in one m³ of the pile (3) is lower than 250 and it is manufactured from at least one intermediate product (2'), wherein the number of successive layers (4) of paper counted sequentially and constituting an intermediate product (2') amounts to at least three and at the same time at most nine, and the corrugated layers (8) in intermediate products adjacent to one another (2') are displaced in relation to one another in parallel planes and/or turned through an angle not greater than a right angle, **characterised in that** the corrugation profile has a spacing corresponding to that of another corrugation type, preferably not higher than the spacing of corrugation type D.

2. The light construction support in accordance with claim 1, **characterised in that** it is manufactured using corrugated board (2) containing a corrugated layer (8) with the corrugation height of (6) up to 50mm.

3. The light construction support in accordance with claim 1 or claim 2, **characterised in that** it is manufactured using intermediate products (2') containing corrugated uniform layers (8).

4. The light construction support in accordance with claim 1 or claim 2, **characterised in that** it is manufactured using intermediate products (2'), which differ in the shape of the corrugated layer (8) in relation to one another.

5. The light construction support in accordance with any claim from claim 1 to claim 4, **characterised in that** at least one layer (4) of the intermediate product (2') is made of paper of a different paper substance in relation to at least one of the other layers (4) of the intermediate product (2').

6. The light construction support in accordance with any claim from claim 1 to claim 5, **characterised in that** the corrugated layer (8) has a triangular or a trapezoidal or a rectangular or a sinusoidal corrugation shape.

7. The light construction support in accordance with any claim from claim 1 to claim 6, **characterised in that** at least one of its cross-sections, especially parallel to the placement of the intermediate products (2'), has regular shape, such as: a circle, an ellipsis, an oval, a rectangle, a triangle, a trapezoid, a polygon, a star, or alternately has an irregular shape.

8. The light construction support in accordance with any claim from claim 1 to claim 7, **characterised in that** the first external flat layer (9) and/or the second external flat layer (10) is multiplied within one intermediate product (2').

9. The light construction support in accordance with any claim from claim 1 to claim 8, **characterised in that** its thickness measured along the pile (3) is between 0.005m and 2.0m, preferably between 0.05m and 0.50m.

10. The light construction support in accordance with any claim from claim 1 to claim 9, **characterised in that** the area of any of the external flat layers (9,10) is between 0.001m² and 5.0m², preferably between 0.1m² and 1m² .

11. The light construction support in accordance with any claim from claim 1 to claim 10, **characterised in that** the number of intermediate product layers used to manufacture it is lower than fifty, preferably lower than ten.

12. The light construction support in accordance with any claim from claim 1 to claim 11, **characterised in that** at least one intermediate product (2') in a pile (3) of intermediate products (2') has a cardboard bending lines (11) and/or cutting lines (12) in relation to which at least a part of a pile (3) or an intermediate product (2') is properly bended and/or separated or folded.

13. The light construction support in accordance with any claim from claim 1 to claim 12, **characterised in that** it is formed into a spatial block (1'), where the block (1') preferably contains inside at least one empty area (13).

14. The light construction support in accordance with claim 13, **characterised in that** it constitutes a packaging or a container.

## Patentansprüche

1. Leichte Konstruktionsstütze (1), hergestellt aus Papier oder aus Pappe, die zu Wellpappe geformt ist, die ein in einem Stapel verlegtes Halberzeugnis darstellt, mit räumlich vorgegebener Form und mit mindestens einer Lage, in der der Stapel optional von einem Umschlag (5) umhüllt ist, in dem die Wellpappe eine Welle mit einer Höhe hat, die mindestens einer Höhe einer Profilwelle der Art B entspricht, in dem das Halberzeugnis (2') Wellpappe (2) ist, die aus mindestens drei Lagen besteht, und die eine gewellte Lage (8) besitzt, die zwischen mindestens der ersten äußeren flachen Lage (9) und mindestens einer zweiten äußeren flachen Lage (10) angebracht ist, in dem ein m³ davon maximal 1 000 m² Papier enthält, vorzugsweise weniger als 750 m2 Papier, in dem die Anzahl der Halberzeugnisse (2') in einem m³ des Stapels (3) weniger als 250 beträgt, und dieser ist aus mindestens einem Halberzeugnis (2') hergestellt, in dem die sequenziell gezählte Anzahl der Lagen (4) Papier, die aufeinander folgen und das Halberzeugnis (2') bilden, mindestens drei beträgt, und gleichzeitig höchstens neun beträgt, und die gewellten Lagen (8) in den aneinander liegenden Halberzeugnissen (2') in den parallelen Ebenen einander gegenüber versetzt und/oder um einen Winkel gedreht sind, der nicht größer als der rechte Winkel ist, **gekennzeichnet dadurch, dass** die Profilwelle eine Skala hat, die der Welle einer anderen Art entspricht, vorzugsweise einer nicht größeren als der Wert der Skala der Welle der Art D.

2. Leichte Konstruktionsstütze nach Anspruch 1, **gekennzeichnet dadurch, dass** diese aus Wellpappe (2) besteht, die eine gewellte Lage (8) mit der Höhe (6) der Welle von bis zu 50 mm enthält.

3. Leichte Konstruktionsstütze nach Anspruch 1 oder Anspruch 2, **gekennzeichnet dadurch, dass** diese aus Halberzeugnissen (2') besteht, die homogene gewellte Lagen (8) enthalten.

4. Leichte Konstruktionsstütze nach Anspruch 1 oder Anspruch 2, **gekennzeichnet dadurch, dass** diese aus Halberzeugnissen (2') besteht, die sich voneinander in der Form der Welle der gewellten Lage (8) unterscheiden.

5. Leichte Konstruktionsstütze nach einem der Ansprüche, Anspruch 1 bis Anspruch 4, **gekennzeichnet dadurch, dass** mindestens eine Lage (4) des Halberzeugnisses (2') aus Papier mit einer anderen Grammatur im Vergleich zu mindestens einer der anderen Lagen (4) des Halberzeugnisses (2') besteht.

6. Leichte Konstruktionsstütze nach einem der Ansprüche, Anspruch 1 bis Anspruch 5, **gekennzeichnet dadurch, dass** die gewellte Lage (8) die Form einer dreieckigen oder trapezförmigen oder rechteckigen oder sinusförmigen Welle hat.

7. Leichte Konstruktionsstütze nach einem der Ansprüche, Anspruch 1 bis Anspruch 6, **gekennzeichnet dadurch, dass** mindestens einer ihrer Querschnitte, insbesondere der zur Anordnung der Halberzeugnisse (2') parallele Querschnitt, eine regelmäßige Form hat, wie etwa: Kreis, Ellipse, Oval, Rechteck, Dreieck, Trapez, Vieleck, Stern, oder, alternativ dazu, eine unregelmäßige Form hat.

8. Leichte Konstruktionsstütze nach einem der Ansprüche, Anspruch 1 bis Anspruch 7, **gekennzeichnet dadurch, dass** die erste äußere flache Lage (9) und/oder die zweite äußere flache Lage (10) im Bereich eines Halberzeugnisses (2') vervielfacht ist.

9. Leichte Konstruktionsstütze nach einem der Ansprüche, Anspruch 1 bis Anspruch 8, **gekennzeichnet dadurch, dass** ihre Dicke, gerechnet entlang des Stapels (3), zwischen 0,005 m und 2,0 m, vorzugsweise zwischen 0,05 Meter und 0,50 Meter liegt.

10. Leichte Konstruktionsstütze nach einem der Ansprüche, Anspruch 1 bis Anspruch 9, **gekennzeichnet dadurch, dass** die Oberfläche von einer der äußeren flachen Lagen (9, 10) zwischen 0,001 m² und 5,0 m², vorzugsweise zwischen 0,1 m² und 1 m² liegt.

11. Leichte Konstruktionsstütze nach einem der Ansprüche, Anspruch 1 bis Anspruch 10, **gekennzeichnet dadurch, dass** die Anzahl der Lagen der zu ihrer Herstellung verwendeten Halberzeugnisse geringer als fünfzig, vorzugsweise geringer als zehn ist.

12. Leichte Konstruktionsstütze nach einem der Ansprüche, Anspruch 1 bis Anspruch 11, **gekennzeichnet dadurch, dass** mindestens ein Halberzeugnis (2') im Stapel (3) der Halberzeugnisse (2') eine Falzlinie (11) und/oder eine Schnittlinie (12) besitzt, relativ zu der mindestens ein Fragment des Stapels (3) oder das Halberzeugnis (2') entsprechend gebrochen und/oder delaminiert oder gefaltet ist.

13. Leichte Konstruktionsstütze nach einem der Ansprüche, von Anspruch 1 bis Anspruch 12, **gekennzeichnet dadurch, dass** sie zu einem räumlichen Block (1') geformt ist, wobei der Block (1') vorzugsweise mindestens einen Hohlbereich (13) in seinem Inneren enthält.

14. Leichte Konstruktionsstütze nach Anspruch 13, **gekennzeichnet dadurch, dass** diese eine Verpackung oder einen Behälter darstellt.

## Revendications

1. Support de construction léger (1), fabriqué en papier ou en carton, mis en forme en carton ondulé, constituant un produit intermédiaire empilé de manière à former une pile présentant une forme spatiale prédéterminée et comportant au moins une couche, la pile étant éventuellement enveloppée d'une housse de protection contre la poussière (5), le carton ondulé présentant une hauteur de cannelure correspondant au moins à celle du profil de cannelure de type B, dans lequel le produit intermédiaire (2') est un carton ondulé (2) constitué d'au moins trois couches, comprenant une couche ondulée (8) disposée entre au moins une première couche extérieure plane (9) et au moins une seconde couche extérieure plane (10), un mètre cube de celui-ci contenant au plus 1000 m² de papier, de préférence moins de 750 m² de papier, le nombre de produits intermédiaires (2') dans un mètre cube de la pile (3) étant inférieur à 250, le support étant réalisé à partir d'au moins un produit intermédiaire (2'), le nombre de couches successives (4) de papier, comptées séquentiellement et constituant un produit intermédiaire (2'), étant d'au moins trois et d'au plus neuf, les couches ondulées (8) des produits intermédiaires (2') adjacents étant décalées les unes par rapport aux autres dans des plans parallèles et/ou orientées avec une rotation d'un angle ne dépassant pas un angle droit, **caractérisé en ce que** le profil de cannelure présente un pas correspondant à celui d'un autre type de cannelure, de préférence n'excédant pas le pas de la cannelure de type D.

2. Support de construction léger selon la revendication 1, **caractérisé en ce qu'**il est fabriqué à partir d'un carton ondulé (2) comprenant une couche ondulée (8) dont la hauteur de cannelure (6) est inférieure ou égale à 50 mm.

3. Support de construction léger selon la revendication 1 ou 2, **caractérisé en ce qu'**il est fabriqué à partir de produits intermédiaires (2') comprenant des couches ondulées (8) uniformes.

4. Support de construction léger selon la revendication 1 ou 2, **caractérisé en ce qu'**il est fabriqué à partir de produits intermédiaires (2') dont les couches ondulées (8) présentent entre elles des formes différentes.

5. Support de construction léger selon l'une quelconque des revendications 1 à 4, **caractérisé en ce qu'**au moins une couche (4) du produit intermédiaire (2') est réalisée en un papier présentant un grammage différent de celui d'au moins une autre couche (4) du produit intermédiaire (2').

6. Support de construction léger selon l'une quelconque des revendications 1 à 5, **caractérisé en ce que** la couche ondulée (8) présente une cannelure de forme triangulaire, trapézoïdale, rectangulaire ou sinusoïdale.

7. Support de construction léger selon l'une quelconque des revendications 1 à 6, **caractérisé en ce qu'**au moins l'une de ses sections transversales, notamment parallèlement à la disposition des produits intermédiaires (2'), présente une forme régulière, telle qu'un cercle, une ellipse, un ovale, un rectangle, un triangle, un trapèze, un polygone ou une étoile, ou présente alternativement une forme irrégulière.

8. Support de construction léger selon l'une quelconque des revendications 1 à 7, **caractérisé en ce que** la première couche extérieure plane (9) et/ou la seconde couche extérieure plane (10) est multipliée au sein d'un même produit intermédiaire (2').

9. Support de construction léger selon l'une quelconque des revendications 1 à 8, **caractérisé en ce que** son épaisseur, mesurée suivant la pile (3), est comprise entre 0,005 m et 2,0 m, de préférence entre 0,05 m et 0,50 m.

10. Support de construction léger selon l'une quelconque des revendications 1 à 9, **caractérisé en ce que** la surface de l'une quelconque des couches extérieures planes (9, 10) est comprise entre 0,001 m² et 5,0 m², de préférence entre 0,1 m² et 1 m².

11. Support de construction léger selon l'une quelconque des revendications 1 à 10, **caractérisé en ce que** le nombre de couches de produits intermédiaires utilisées pour sa fabrication est inférieur à cinquante, de préférence inférieur à dix.

12. Support de construction léger selon l'une quelconque des revendications 1 à 11, **caractérisé en ce qu'**au moins un produit intermédiaire (2') dans une pile (3) de produits intermédiaires (2') comporte des lignes de pliage (11) et/ou des lignes de découpe (12) du carton, par rapport auxquelles au moins une partie de la pile (3) ou un produit intermédiaire (2') est correctement plié et/ou séparé ou replié.

13. Support de construction léger selon l'une quelconque des revendications 1 à 12, **caractérisé en ce qu'**il est formé en un bloc spatial (1'), ledit bloc (1') comprenant de préférence à l'intérieur au moins une zone vide (13).

14. Support de construction léger selon la revendication 13, **caractérisé en ce qu'**il constitue un emballage ou un conteneur.
